# EUROPÄISCHE PATENTANMELDUNG

(11) **EP 2 821 933 A1**
(43) Veröffentlichungstag der Anmeldung: **07.01.2015**
(21) Anmeldenummer: 14002291.4
(22) Anmeldetag: 04.07.2014
(51) Int. Cl.: G06K 7/10, G06K 19/06, G06K 7/14, G06K 19/077

(54) **Identifikationsdatenträger mit modifizierbarem Barcode**

(30) Priorität: 05.07.2013 DE 102013011238
(71) Anmelder: Yengec Tayfun, 78652 Deißlingen (DE)
(72) Erfinder: Yengec Tayfun, 78652 Deißlingen (DE)
(74) Vertreter: Binner, Bernhard

(57) **Zusammenfassung**

Die Erfindung betrifft einen Datenträger (1) mit einem mittels einer Kamera abtastbaren Gesamtcode, dessen Informationsinhalte mittels eines Decoders auswertbar sind, welchem das von der Kamera erfasste Bild übermittelbar ist. Mit der Erfindung wird ein Identifikationsdatenträger (1) mit einem Gesamtcode geschaffen, welcher einerseits die gewünschten Identifikationsdaten enthält, andererseits jedoch nicht in einfacher Weise auslesbar ist. Dies wird erfindungsgemäß dadurch erreicht, dass eine Zwischenwand (3) vorgesehen ist, welche derart verstellbar ist, dass in der Ausgangsstellung der Zwischenwand (3) lediglich ein Teil (11) des Gesamtcodes nach außen sichtbar ist. Erst durch die Verstellung (12) der Zwischenwand (3) in ihre definierte Endlage wird erreicht, dass der Gesamtcode (11, 16, 17) komplett nach außen sichtbar und somit mittels eines Decoders auswertbar ist.

## Beschreibung

Die Erfindung betrifft einen Datenträger mit einem mittels einer Kamera abtastbaren Gesamtcode, dessen Informationsinhalte mittels eines Decoders auswertbar sind, welchem das von der Kamera erfasste Bild übermittelbar ist.

Im industriellen oder auch privaten Bereich besteht häufig das Erfordernis, Objekte, Gegenstände oder Personen zum Zwecke der Identifikation der unterschiedlichsten Art mit Identifikationsdatenträgern zu versehen.

Insbesondere im privaten Bereich werden so mittels Anhänger, beispielsweise Koffer, Schulranzen oder auch sonstige Dinge mit Namensschildern in Form von Anhängern versehen, so dass diese Objekte nach Verlust dem ursprünglichen Besitzer zugeordnet werden können.

Im Bereich von Personen selbst, wie beispielsweise bei Kindern, älteren Personen oder auch bei Personen, welche besondere Krankheiten haben, ist es ebenfalls von Vorteil, dass diese Personen mit Namensschildern oder auch mit Krankheitsausweisen ausgestattet werden, um beispielsweise bei Unfall oder dergleichen ebenfalls eine Personenidentifikation einerseits oder auch für eine spätere Behandlung die korrekte Behandlungtherapie ermitteln zu können.

So ist es häufig, beispielsweise bei Blutern oder zuckerkranken Menschen dringend notwendig, dass diese einen entsprechenden Identifikationsdatenträger insbesondere für ihr Krankheitsbild bei sich führen, um im Ernstfall auch die korrekten bzw. wichtigen lebensrettenden Maßnahmen frühzeitig ergreifen zu können.

Im Falle von Schultaschen, Reisegepäck und dergleichen werden derzeit zu deren Identifikation Namensschilder eingesetzt, welche die entsprechenden Informationen über den Inhaber in Form von lesbaren Buchstaben und Ziffern aufweisen. Auch bei Kindern, welche sich eventuell nicht korrekt bezüglich ihres Wohnortes artikulieren können, ist es ebenfalls üblich, solche Namensschilder einzusetzen, so dass, sollte ein solches Kind sich einmal verirren, dessen Wohnort durch Ablesen des Namensschildes identifizierbar ist.

Solche Identifikationsdatenträge in Form von Namensschilder, Krankenausweisen oder dgl. haben jedoch den Nachteil, dass diese in einfacher Weise von jeder x-beliebigen Person, welche des Lesens mächtig ist, ausgelesen werden können, so dass insbesondere Adressdaten oder auch Krankheitsdaten unautorisiert ermittelt werden können.

Weiter ist es zwischenzeitlich bei Gegenständen weithin bekannt, optisch erfassbare Codierungen (Gesamtcode), insbesondere sogenannte QR-Codes zu verwenden, um deren Eigenschaften, Hersteller und dergleichen mehr auslesbar am entsprechenden Produkt anbringen zu können. Der Gesamtcode eines solchen QR-Codes ist mittels entsprechender Lesegeräte auslesbar, so dass dessen Daten in eine vom Menschen in Form von Buchstaben und Zahlen lesbare Form umgesetzt werden kann. Mittlerweile können solche QR-Codes mittels sogenannter Fotohandys ausgelesen werden, so dass deren Daten bei offensichtlich angebrachten Gesamtcodes - sozusagen im Vorbeigehen - erfasst und ausgewertet werden können. Insoweit wäre es zwar wünschenswert, eine Personenidentifikation oder eine Identifikation bestimmter personenbezogener Gegenstände, wie Koffer, Schulranzen und dergleichen mit einem solchen QR-Code zu versehen. Jedoch besteht hier ohne weitere Maßnahmen für einen Dritten die Möglichkeit der Kenntnisnahme und Auswertung eines solchen QR-Codes, da es lediglich erforderlich ist mit einem Lesegerät, wie einem Handy der neueren Art, diesen Code aufzunehmen und auszuwerten.

Des Weiteren haben solche QR-Codes aber den Vorteil, dass beliebige Identifikationsmerkmale codiert werden können. So kann zum Beispiel der Name, eine E-Mail-Adresse oder auch die Internetadresse eines Benutzers angegeben. Damit ist eine personenbezogene Datenerfassung, wie beispielsweise der Wohnort nicht direkt ermittelbar. Da jedoch auch neuere Handys mittlerweile internetfähig sind, können diese Daten ohne große Mühe auch im Nachhinein ermittelt werden, was in der Regel nicht erwünscht ist.

Dementsprechend liegt der Erfindung die Aufgabe zugrunde, einen Identifikationsdatenträger mit einem Gesamtcode zu schaffen, welcher einerseits zwar die gewünschten Identifikationsdaten (vollständig) enthält, andererseits jedoch nicht in einfacher Weise auslesbar ist.

Die Aufgabe wird erfindungsgemäß durch die Merkmalskombinationen der unabhängigen Ansprüche 1, 4 und 6 gelöst.

So ist gemäß Anspruch 1 vorgesehen sind, dass der Datenträger ein Gehäuse mit einer Frontwand und einer Rückwand aufweist und, dass zwischen der Frontwand und der Rückwand eine aus einer Ausgangslage in eine Endlage verstellbare Zwischenwand vorgesehen ist und, dass auf der Frontwand ein erster Teilcode des Gesamtcodes sichtbar angeordnet ist und, dass in Stellrichtung vor und hinter dem ersten Teilcode sich jeweils an den ersten Teilcode direkt anschließende Durchbrüche vorgesehen sind, welche sich quer zur Stellrichtung über die gesamte Breite des ersten Teilcodes erstrecken und, dass auf der Zwischenwand ein zweiter und ein dritter Teilcode angeordnet ist, welche jeweils quer zur Stellrichtung verlaufen und in Stellrichtung einen Abstand voneinander aufweisen, welcher dem Abstand der Durchbrüche der Frontwand entspricht und, dass der zweite und der dritte Teilcode in der Ausgangslage der Zwischenwand von der Frontwand unsichtbar verdeckt sind und, dass der zweite und der dritte Teilcode nach Verstellung der Zwischenwand in ihre Endlage durch die beiden Durchbrüche der Frontwand vollständig sichtbar sind und den ersten Teilcode sichtbar zum vollständigen Gesamtcode ergänzen.

Alternativ zu Anspruch 1 kann gemäß Anspruch 3 vorgesehen sein, dass der Datenträger gehäuseartig ausgebildet ist und mit einer Frontwand versehen ist und, dass hinter der Frontwand eine aus einer Ausgangslage in eine Endlage verstellbare Zwischenwand vorgesehen ist und, dass auf der Frontwand ein erster Teilcode des Gesamtcodes sichtbar angeordnet ist und, dass in Stellrichtung vor und hinter dem ersten Teilcode sich jeweils an den ersten Teilcode direkt anschließende Durchbrüche vorgesehen sind, welche sich quer zur Stellrichtung über die gesamte Breite des ersten Teilcodes erstrecken und, dass auf der Zwischenwand ein zweiter und ein dritter Teilcode angeordnet ist, welche jeweils quer zur Stellrichtung verlaufen und in Stellrichtung einen Abstand voneinander aufweisen, welcher dem Abstand der Durchbrüche der Frontwand entspricht und, dass der zweite und der dritte Teilcode in der Aufgangslage der Zwischenwand von der Frontwand unsichtbar verdeckt sind und, dass der zweite und der dritte Teilcode nach Verstellung der Zwischenwand in ihre Endlage durch die beiden Durchbrüche der Frontwand vollständig sichtbar sind und den ersten Teilcode sichtbar zum vollständigen Gesamtcode ergänzen.

Weiter kann alternativ zu den Ansprüchen 1 und 3 gemäß Anspruch 6 vorgesehen sein, dass der Datenträger ein Gehäuse mit einer Frontwand und einer Rückwand aufweist und, dass zwischen der Frontwand und der Rückwand eine aus einer Ausgangslage in eine Endlage verstellbare Zwischenwand vorgesehen ist und, dass die Frontwand einen Durchbruch aufweist und, dass die Zwischenwand einen Durchbruch aufweist und, dass auf der Rückwand zur Frontwand hin der Gesamtcode angeordnet ist und, dass der Gesamtcode in der Ausgangslage der Zwischenwand teilweise von der Zwischenwand unsichtbar abgedeckt ist und, dass der Gesamtcode nach Verstellung der Zwischenwand in ihre Endlage durch den Durchbruch der Zwischenwand und durch den Durchbruch der Frontwand vollständig sichtbar ist. Den unterschiedlichen Lösungen der unabhängigen Ansprüche 1, 3 und 5 ist gemeinsam, dass in der Ausgangsstellung der Zwischenwand lediglich ein Teil des Gesamtcodes nach außen sichtbar ist. Erst durch Verstellung der Zwischenwand in ihre definierte Endlage wird erreicht, dass der Gesamtcode komplett nach außen sichtbar und somit mittels eines Decoders auswertbar ist.

Bei der Ausführungsvariante nach Anspruch 1 ist der Gesamtcode in insgesamt drei Teilcodes unterteilt. Der erste Teilcode ist bei dieser Ausführungsvariante nach außen sichtbar auf der Frontwand angeordnet. Dieser Teilcode ist jedoch so ausgestaltet, dass eine verwertbare Decodierung nicht möglich ist. Damit ist sichergestellt, dass zwar erkennbar ist, dass ein solcher Gesamtcode vorhanden sein muss. Um nun an die Informationsinhalte des Gesamtcodes heranzukommen bzw. einen solchen auslesen und auswerten zu können, ist es nun notwendig, diesen ersten Teilcode zum Gesamtcode zu ergänzen.

Bei der Ausführungsvariante nach Anspruch 1 sind hierzu zwei weitere Teilcode direkt auf der Zwischenwand angeordnet, welche sich "unterhalb" oder "hinter" der Frontwand befinden. In der Ausgangsstellung dieser Zwischenwand sind diese beiden zusätzlichen Teilcode abgedeckt und somit in der Ausgangsstellung der Zwischenwand nach außen nicht sichtbar. Insoweit kann hier also in dieser Ausgangsstellung der Zwischenwand keine Auswertung mittels des Decoders stattfinden.

Wird nun die Zwischenwand aus ihrer Ausgangsstellung in ihre vordefinierte Endstellung gebracht, so werden die beiden zusätzlichen Teilcode durch die entsprechenden Durchbrüche der Frontwand nach außen sichtbar. Diese Durchbrüche sind dabei unmittelbar anschließend an den ersten Teilcode angeordnet, so dass sich bei "vertikaler" Ansicht des ersten Teilcode dieser durch den zweiten und dritten Teilcode zum Gesamtcode ergänzt wird. Damit ist der aus den drei Teilcodes "zusammengefügte" Gesamtcode mittels einer Kamera erfassbar bzw. abtastbar und es können dessen Informationsinhalte mittels des Decoders ausgewertet werden.

Gemäß Anspruch 2 kann zur Frontwand noch eine Rückwand vorgesehen sein, so dass der Datenträger eine Art Gehäuse bildet, welche die Zwischenwand verstellbar aufnimmt.

Weiter kann gemäß Anspruch 3 die Zwischenwand auch zweiteilig ausgebildet sein. Danach kann vorgesehen sein, dass die Zwischenwand einen ersten Zwischenwandabschnitt und einen zweiten Zwischenwandabschnitt bildet und, dass der erste Zwischenwandabschnitt mit dem zweiten Teilcode versehen ist und aus einer Ausgangslage in Richtung der Längsrichtung in eine Endlage verstellbar ist, in welcher der zweite Teilcode durch den ersten Durchbruch der Frontwand nach außen sichtbar ist und, dass der zweite Zwischenwandabschnitt mit dem dritten Teilcode versehen ist und aus einer Ausgangslage entgegen der Richtung der Längsrichtung in eine Endlage verstellbar ist, in welcher der dritte Teilcode durch den zweiten Durchbruch der Frontwand nach außen sichtbar ist und, dass der zweite und der dritte Teilcode den ersten Teilcode in den Endlagen der beiden Zwischenwandabschnitte zum einheitlichen Gesamtcode ergänzen.

Gemäß der Ausführungsvariante nach Anspruch 4 ist der Gesamtcode als Ganzes direkt auf der Zwischenwand selbst angeordnet. In der Ausgangsstellung der Zwischenwand jedoch ist dieser Gesamtcode teilweise von der Frontwand verdeckt. Die Frontwand weist hierzu einen Durchbruch auf, durch welchen hindurch der nicht abgedeckte Teil des Gesamtcodes nach außen erkennbar ist. Somit wird auch hier gewährleistet, dass nach außen erkennbar ist, dass ein solcher Gesamtcode vorhanden sein muss. Wird nun die Zwischenwand mit dem aufgebrachten Gesamtcode in ihre Endstellung gebracht, so gelangt der Gesamtcode vollständig mit dem Durchbruch der Frontwand in Überdeckung und wird vollständig durch den Durchbruch der Frontwand nach außen sichtbar. So kann nun auch hier im Bedarfsfall der Gesamtcode mittels einer Kamera abgetastet und mittels des Decoders ausgewertet werden, so dass die Informationsinhalte dieses Gesamtcodes ermittelbar sind.

Gemäß Anspruch 5 kann auch bei dieser Ausführungsvariante nach Anspruch 4 zur Frontwand eine Rückwand vorgesehen sein, so dass auch bei dieser Ausführungsvariante durch die Frontwand und die Rückwand ein Gehäuse mit einem Aufnahmeraum für die verstellbare Aufnahme der Zwischenwand gebildet wird.

In der dritten Ausführungsvariante nach Anspruch 6 kann vorgesehen sein, dass die Zwischenwand selbst mit einem Durchbruch versehen ist. Unterhalb der Zwischenwand, das heißt auf der Rückwand, ist bei dieser Ausführungsvariante der Gesamtcode aufgebracht. Befindet sich die Zwischenwand nun in ihrer Ausgangslage, so wird der Gesamtcode durch diese Zwischenwand teilweise abgedeckt, so dass dieser zwar noch teilweise nach außen sichtbar, jedoch nicht auswertbar ist. Wird nun die Zwischenwand in ihre Endlage gebracht, so wird der Gesamtcode durch den Durchbruch der Zwischenwand vollständig nach außen sichtbar. Dieser Durchbruch der Zwischenwand gelangt in der Endstellung in Überdeckung mit einem entsprechend in der Frontwand angeordneten Durchbruch, so dass eine Sichtbehinderung auf den Gesamtcode sicher ausgeschlossen ist. Auch bei dieser Ausführungsvariante ist somit in der Ausgangslage der Zwischenwand der Gesamtcode soweit unkenntlich gemacht, dass dieser nicht auswertbar ist.

Weitere vorteilhafte Ausgestaltungen der Erfindung sind den weiteren Unteransprüchen zu entnehmen.

So kann gemäß Anspruch 7 vorgesehen sein, dass die Frontwand einen zusätzlichen Durchbruch oder zwei zusätzliche quer zur Stellrichtung verlaufende Durchbrüche aufweist und, dass die Zwischenwand oberseitig zur Frontwand hin eine Farbmarkierung oder zwei Farbmarkierungen aufweist und, dass die Farbmarkierung oder die Farbmarkierungen in der Ausgangslage der Zwischenwand durch die Frontwand unsichtbar verdeckt ist bzw. sind und, dass die Farbmarkierung oder die Farbmarkierungen in der Endlage der Zwischenwand durch den zusätzlichen Durchbruch bzw. durch die zusätzlichen Durchbrüche nach außen durch die Frontwand hindurch sichtbar sind. Durch diese Ausgestaltung wird eine evtl. unautorisierte Manipulation des Datenträgers einfacher erkennbar. Da die Farbmarkierungen nur in der Endlage der Zwischenwand nach außen sichtbar sind, kann der Benutzer des Datenträgers in einfacher Weise erkennen, ob der Datenträger "aktiviert" ist und somit dessen Informationsinhalte ausgelesen werden können.

Eine weitere Sicherung des Datenträgers wird durch die Ausgestaltung nach Anspruch 8 erreicht. Danach kann vorgesehen sein, dass die Zwischenwand in ihrer Ausgangslage durch einen Sicherungsstift gesichert ist, welcher feststehend in der Rückwand oder in der Frontwand angeordnet ist und mit der Zwischenwand in deren Ausgangslage in Eingriff steht. Dieser Sicherungsstift verhindert, dass die Zwischenwand versehentlich oder unbefugt aus ihrer Ausgangslage in ihre Endlage verstellt wird. Beim Verstellen der Zwischenwand wird dieser Sicherungsstift abgeschert. Nach dem Abscheren kann die Zwischenwand zur Wiederherstellung des "gesicherten" Ursprungszustandes zunächst aus dem Zwischenraum zwischen der Frontwand und der Rückwand herausgezogen werden. Anschließend werden die voneinander getrennten Teile des Sicherungsstiftes einerseits aus der Zwischenwand und anderseits aus Rückwand oder der Frontwand entfernt. Nachdem die Zwischenwand wieder in ihre Ausgangslage zwischen der Frontwand und der Rückwand gebracht wurde ist sodann eine neuer Sicherungsstift einsetzbar. Damit lässt sich der Datenträger nach dessen "Aktivierung" in einfacher Weis wieder in seine gesicherte "inaktive" Ausganglage überführen, in welcher der Gesamtcode nach außen nur in einer nicht auslesbaren Form erkennbar ist.

Der Datenträger mit seiner Frontwand und seiner Zwischenwand kann dabei auch integraler Bestandteil eines Gegenstandes, wie beispielsweise einem Sturzhelm, Koffer oder eines sonstigen, zu identifizierenden Gegenstandes sein.

Anhand der Zeichnung werden nachfolgend beispielhaft einige Ausführungsvarianten der Erfindung näher erläutert. Es zeigt:
- Fig. 1: eine perspektivische Explosionsdarstellung der Bestandteile eines ersten Datenträgers, bei welchem ein erster Teilcode nach außen sichtbar auf der Frontwand und zwei weitere Teilcodes zur Frontwand hin auf der Zwischenwand angeordnet sind;
- Fig. 2: den Datenträger aus Fig. 1 im montierten Zustand, wobei sich der Datenträger in seinem "inaktiven" Zustand befindet und die Frontwand im Teilschnitt dargestellt ist;
- Fig. 3: eine Draufsicht des Datenträgers aus den Fig.1 und 2 im "aktivierten" Zustand, in welchem alle drei Teilcodes nach außen sichtbar sind;
- Fig. 4: einen Schnitt IV-IV des Datenträgers aus Fig. 3;
- Fig. 5: eine zweite Ausführungsvariante eines Datenträgers in perspektivischer Explosionsdarstellung seiner Bestandteile, wobei hier die Zwischenwand einen Durchbruch aufweist und der Gesamtcode auf der Zwischenwand zur Frontwand hin angeordnet ist;
- Fig. 6: den Datenträger aus Fig. 5 im montierten Zustand, wobei die Frontwand im Teilschnitt dargestellt ist und sich der Gesamtcode bzw. die Zwischenwand mit dem Gesamtcode in ihrer inaktiven Ausgangslage befindet, in welcher der Gesamtcode teilweise von der Frontwand abgedeckt ist;
- Fig. 7: eine weitere Ausführungsvariante eines erfindungsgemäßen Datenträgers in perspektivischer Explosionsdarstellung seiner Bestandteile, wobei hier der Gesamtcode oberseitig auf der Rückwand angeordnet ist und die Zwischenwand und die Frontwand jeweils einen Durchbruch aufweisen;
- Fig. 8: den Datenträger aus Fig. 7 in perspektivischer Darstellung, wobei in dieser Darstellung sowohl die Frontwand als auch die Zwischenwand im Teilschnitt dargestellt sind und sich die Zwischenwand in ihrer "inaktiven" Ausgangslage befindet.

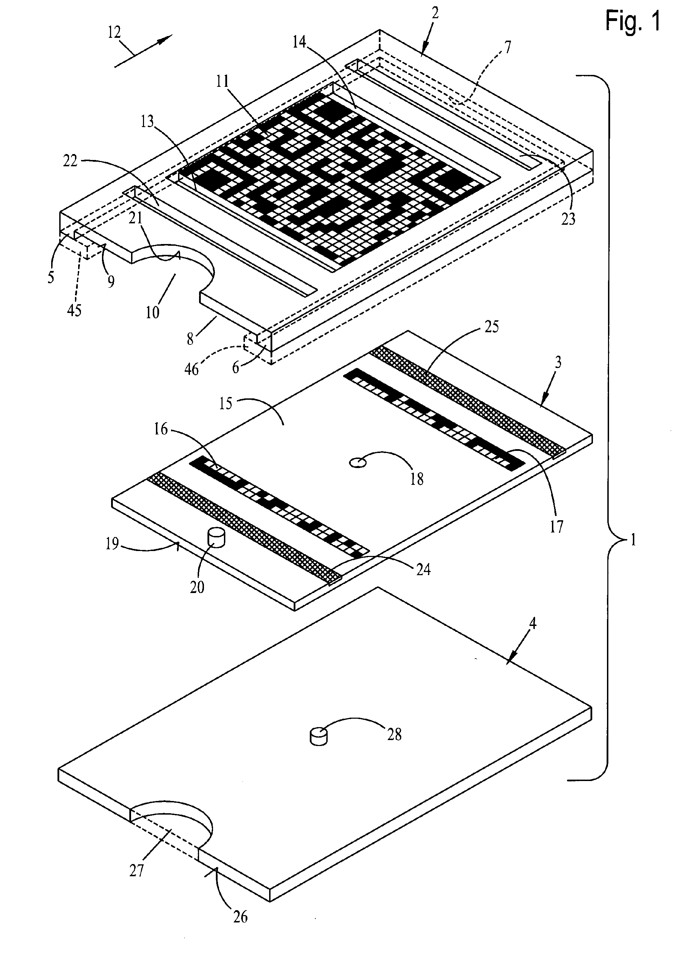

Fig. 1 zeigt eine perspektivische Explosionsdarstellung der Bestandteile einer ersten Ausführungsvariante eines Datenträgers 1. Dieser Datenträger 1 besteht beim vorliegenden Ausführungsbeispiel aus einer Frontwand 2, einer Zwischenwand 3 sowie einer Rückwand 4.

Wie aus Fig. 1 ersichtlich ist, bildet die Frontwand 2 in ihren Randbereichen ihrer Seitenkanten sowie ihrer rückwärtigen Seitenkante nach unten vorstehende Montagestege 5, 6 und 7, so dass unterhalb der Frontwand 2 ein Aufnahmeraum 8 entsteht, in welchen die Zwischenwand 3 verstellbar einsetzbar ist. Des Weiteren weist die Frontwand 2 zwischen den seitlichen Montagestegen 5 und 6 im Bereich ihrer vorderen Stirnkante 9 eine etwa halbkreisförmige Aussparung 10 auf.

Oberseitig ist auf der Frontwand 2 ein erster Teilcode 11 vorgesehen, welcher Teil eines Gesamtcodes ist, welcher beispielsweise als sogenannter QR-Code ausgestaltet ist. In Längsrichtung des Pfeiles 12 sind vor und hinter diesem ersten Teilcode 11 jeweils Durchbrüche 13 und 14 vorgesehen, welche sich jeweils direkt unmittelbar an den ersten Teilcode 11 anschließen. Diese beiden Durchbrüche 13 und 14 sind etwa rechteckig ausgebildet und erstrecken sich über die gesamte Breite des ersten Teilcodes 11. In diese Durchbrüche 13 und 14 kann noch eine Art durchsichtiges "Fenster" eingesetzt sein, so dass in den Aufnahmeraum 8 von außen keine Fremdkörper eindringe können.

Des Weiteren zeigt Fig. 1, dass auf der zur Frontplatte 2 hin gerichteten Oberseite 15 der Zwischenplatte 3 ein zweiter und ein dritter Teilcode 16 und 17 vorgesehen sind. Der Abstand dieser beiden Teilcode 16 und 17 entspricht dabei in Längsrichtung des Pfeiles 12 dem Abstand der beiden Durchbrüche 13 und 14 der Frontwand 2.

Des Weiteren ist aus Fig. 1 erkennbar, dass die Zwischenwand 3 eine zentrale Durchgangsbohrung 18 aufweist. Im Bereich ihrer vorderen Stirnkante 19 ist die Zwischenwand 3 mit einem vertikal nach oben vorstehenden Anschlagstift 20 versehen, über welchen die Zwischenplatte 3 im montierten Zustand aus einer Ausgangslage in eine Endlage in Richtung der durch den Pfeil 12 angegebenen Stellrichtung verstellbar ist. Dieser Anschlagstift 20 dient dementsprechend einerseits zur Verstellung der Zwischenplatte 3 und kann aber auch andererseits als Anschlag bei Erreichen der Endstellung dienen, so dass dieser Anschlagstift mit der Begrenzungskante 21 der Aussparung 10 der Frontplatte 2 in Wirkverbindung gelangt.

Weiter ist aus Fig. 1 ersichtlich, dass vor und hinter den beiden Durchbrüchen 13 und 14 in Längsrichtung des Pfeiles 12 bzw. in Stellrichtung des Pfeiles 12, zwei weitere, quer zur Stellrichtung verlaufende Durchbrüche 22 und 23 vorgesehen sind. Diesen Durchbrüchen 13, 14 sind auf der Oberseite 15 der Zwischenwand 3 zwei quer zur Längsrichtung 12 verlaufende Farbmarkierungen 24 und 25 zugeordnet. Der Abstand dieser Farbmarkierungen 24 und 25 in Längsrichtung des Pfeiles 12 bzw. in Stellrichtung des Pfeiles 12 entspricht dabei identisch dem Abstand der beiden zusätzlichen Durchbrüche 22 und 23.

Weiter ist aus Fig. 1 ersichtlich, dass bei der dargestellten Ausführungsvariante die Rückwand 4 im Bereich ihrer frontseitigen Stirnkante 26 ebenfalls eine etwa halbkreisförmig ausgebildete Aussparung 27 aufweist. Dies Stirnkante 26 kann beim vorliegenden Ausführungsbeispiel auch ohne diese Aussparung 27 ausgebildet sein, wie dies in gestrichelten Linien dargestellt ist.

Des Weiteren ist auf der Rückwand 4 etwa "mittig" ein Sicherungsstift 28 vorgesehen, welcher im montierten Zustand und in der Ausgangslage der Zwischenwand 3 zur Frontwand 2 und zur Rückwand 4 in die zentrale Durchgangsbohrung 18 der Zwischenwand 3 eingreift. Somit wird durch diesen Sicherungsstift 28 die Ausgangslage der Zwischenwand 3 zwischen der Frontwand 2 und der Rückwand 4 gesichert. Damit ist eine unbeabsichtigte oder unautorisierte Verstellung der Rückwand 3 im montierten Zustand sicher ausgeschlossen.

Die beiden Farbmarkierungen 24 und 25 sowie die beiden Teilcode 16 und 17 sind in der relativen Ausgangsstellung der Zwischenwand 3 zur Frontwand 2 durch diese Frontwand 2 verdeckt und somit nach außen nicht sichtbar.

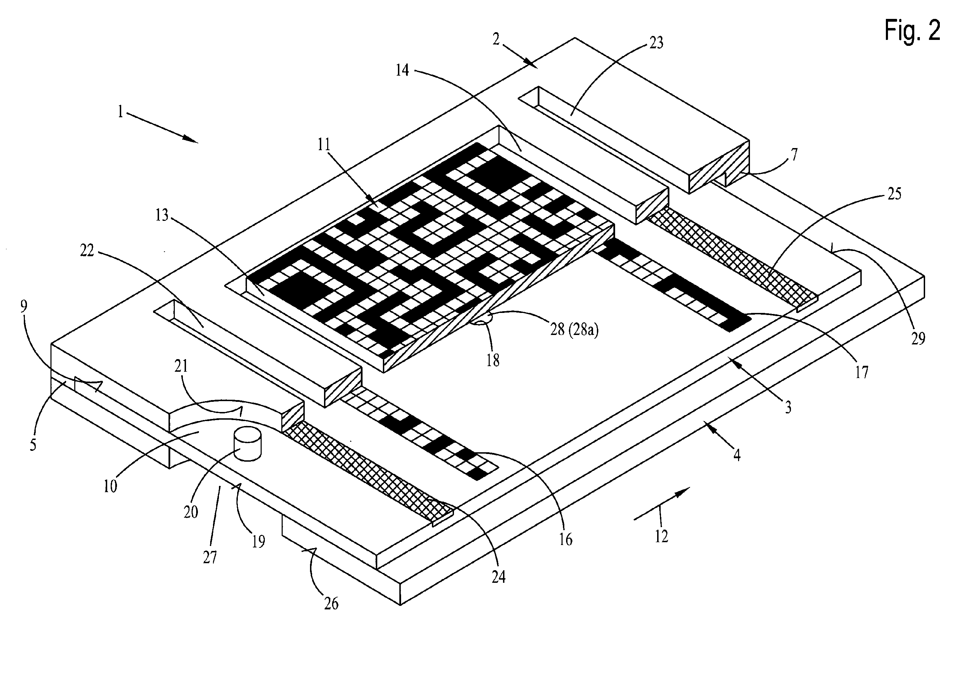

Hierzu zeigt Fig. 2 den montierten Zustand des Datenträgers 1 mit seiner Frontwand 2, seiner Zwischenwand 3 sowie seiner Rückwand 4. Die Frontwand 2 ist in Fig. 2 im Vertikalschnitt dargestellt, so dass die Ausgangslage der Zwischenwand 3 insbesondere zur Frontwand 2 aber auch zur Rückwand 4, deutlich erkennbar ist.

An dieser Stelle sei angemerkt, dass bei der dargestellten Ausführungsvariante eine "durchgehende" Rückwand nicht zwingend erforderlich ist. Zur verstellbaren Aufnahme der Zwischenwand 3 im Aufnahmeraum 8 könnten im Bereich der Montagestege 5, 6 und 7 auch nach innen gerichtete Gleitstege vorgesehen sein, wie dies für die Montagestege 5 und 6 in Fig. 1 in gestichelten Linien 45 und 46 dargestellt ist.

Weitere ist erkennbar, dass die Zwischenwand 3 mit ihrer hinteren Stirnkante 29 in Stellrichtung des Pfeiles 12 einen Abstand zum hinteren Montagesteg 7 der Frontwand 2 aufweist. Die Ausgangslage der Zwischenwand 3 ist, wie zuvor beschrieben, durch den Sicherungsstift 28 in Verbindung mit der zentralen Durchgangsbohrung 18 definiert, wobei dieser Sicherungsstift 28 in diese Durchgangsbohrung 18 in der in Fig. 2 dargestellten Ausgangslage der Zwischenwand 3 zur Frontwand 2 und zur Rückwand 4 definiert ist.

In dieser Ausgangslage liegt die vordere Stirnkante 19 der Zwischenwand 3 bündig im Bereich der vorderen Stirnkante 9 der Frontwand 2 und auch zur vorderen Stirnkante 26 der Rückwand 4. Weiter ist aus Fig. 2 erkennbar, dass die Frontwand 2 über ihre Montagestege 5 (6), 7 auf die Rückwand 4 aufgesetzt ist, wobei in Fig. 2 aufgrund der geschnittenen Darstellung der Frontwand 2 der "vordere" Montagesteg 6 nicht erkennbar ist.

Zur feststehenden Verbindung der Frontwand 2 auf der Rückwand 4, kann eine Klebverbindung oder auch eine Schweißverbindung oder auch eine Schraubverbindung vorgesehen sein. Dies ist im Wesentlichen vom verwendeten Material dieser Bauteile abhängig.

Aufgrund des Abstandes in Längsrichtung des Pfeiles 12 bzw. in Stellrichtung des Pfeiles 12 der hinteren Stirnkante 29 zum hinteren Montagesteg 7 sowie dem Abstand in Stellrichtung des Pfeiles 12 des Anschlagstiftes 20 zur Begrenzungskante 21 der Aussparung 10 ist somit die Zwischenwand 3 in Stellrichtung des Pfeiles 12 um ein vorbestimmtes Maß verstellbar.

In der in Fig. 2 dargestellten Ausgangslage der Zwischenwand 3 zur Frontwand 2, sind die beiden Teilcodes 16 und 17 entgegen des Pfeiles 12 zu den sich an den ersten Teilcode 11 anschließenden Durchbrüchen 13 und 14 versetzt unterhalb der Frontwand 2 angeordnet. Damit sind diese beiden Teilcodes 16 und 17 in dieser Ausgangslage der Zwischenwand 3 nach außen durch die beiden Durchbrüche 13 und 14 nicht sichtbar, sondern von der Frontwand 2 unsichtbar abgedeckt.

Die beiden Farbmarkierungen 24 und 25 sind ebenfalls versetzt zu den zugeordneten Durchbrüchen 22 und 23 der Frontwand 2 unterhalb dieser angeordnet, so dass auch diese durch die Durchbrüche 22 und 23 in der Ausgangslage der Zwischenwand 3 zur Frontwand 2 nicht sichtbar sind.

Um nun den ersten Teilcode 11 durch die beiden Teilcodes 16 und 17 zu einem Gesamtcode, welcher elektronisch auslesbar ist, zu ergänzen, wird die Zwischenwand 3 in Stellrichtung des Pfeiles 12 um ein vorbestimmtes Maß verstellt. Dazu ist es lediglich erforderlich, auf die vordere Stirnkante 19 der Zwischenwand 3 im Bereich der beiden Aussparungen 10 und 27 manuell eine entsprechende Stellkraft aufzubringen. Ist in der Rückwand 4 die Aussparung 27 nicht vorgesehen, so erfolgt die Verstellung durch eine Kraftbeaufschlagung auf den Anschlagstift 20. Bei Erreichen der Endlage der Zwischenwand 3 werden somit die beiden Teilcodes 16 und 17 durch die beiden Durchbrüche 13 und 14 und auch die beiden Farbmarkierungen 24 und 25 durch die zugeordneten Durchbrüche 22 und 23 nach außen sichtbar.

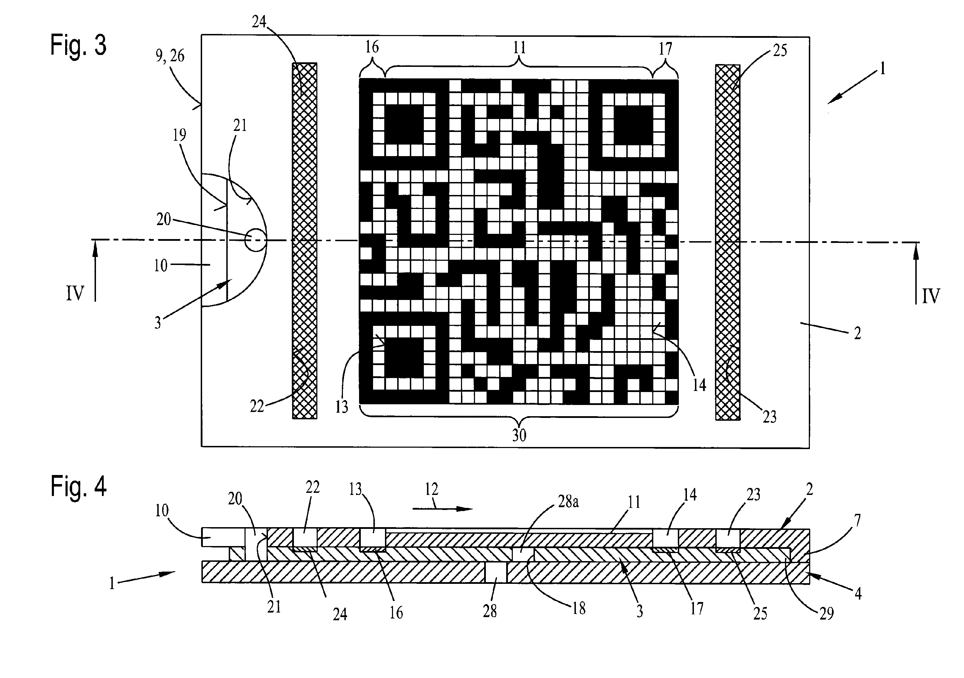

Fig. 3 zeigt hierzu eine Draufsicht auf den Datenträger 1 und insbesondere auf die obere Frontwand 2. Es ist erkennbar, dass nach der Verstellung der Zwischenwand 3 in Stellrichtung des Pfeiles 12, die vordere Stirnkante 19 der Zwischenwand 3 in die Aussparung 10 der Frontwand 2 "eingedrückt" ist und somit in Richtung der Stellrichtung 12 hinter den Stirnkanten 9 und 26 der Frontwand 2 sowie der Rückwand 4 angeordnet ist.

Der Anschlagstift 20 kommt in dieser Endlage der Zwischenwand 3 relativ zur Frontwand 2 mit der Begrenzungskante 21 der Aussparung 10 in Kontakt, so dass die Endstellung durch diesen Anschlagstift 20 eindeutig festgelegt ist. In dieser Endstellung sind die beiden Teilcodes 16 und 17 durch die entsprechend zugehörigen Durchbrüche 13 und 14 der Frontwand 2 nach außen hin sichtbar. Wie aus Fig. 3 ersichtlich ist, schließen sich die beiden Teilcodes 16 und 17 direkt an den ersten Teilcode 11 an, so dass das äußere Erscheinungsbild dieser drei Teilcodes 11, 16 und 17 einen einheitlichen Gesamtcode 30 bilden. Dieser Gesamtcode 30 ist dann mittels, beispielsweise einer Kamera, abtastbar, deren aufgenommenes Bild einem Decoder zur Auswertung der Informationsinhalte des Gesamtcodes mittels eines Decoders auswertbar sind, wie dies aus dem Stand der Technik bekannt ist.

An dieser Stelle sei erwähnt, dass sowohl die Farbmarkierungen 24, 25 als auch die Teilcodes 11, 16 und 17 durch aufkleben, "bemalen", bedrucken oder auch durch jede andere geeignete Weise aufgebracht werden können.

Fig. 4 zeigt eine Schnittdarstellung IV-IV aus Fig. 3. Es ist erkennbar, dass die Zwischenwand 3 in Stellrichtung des Pfeiles 12 verstellt ist und dass der Anschlagstift 20 mit der Begrenzungskante 21 der Aussparung 10 in Eingriff steht. Bei der dargestellten Ausführungsvariante liegt die Zwischenwand 3 in dieser dargestellten Endlage ebenfalls mit ihrer hinteren Stirnkante 29 an dem vertikal nach unten gerichteten Montagesteg 7 der Frontwand 2 an. Somit ist hiermit die Endlage der Zwischenwand 3 im Datenträger 1 eindeutig definiert.

Weiter ist erkennbar, dass der Sicherungsstift 28 aufgrund der ausgeführten Stellbewegung in Richtung des Pfeiles 12 abgeschert ist, so dass sein oberer Teil 28a abgeschert ist und sich entsprechend mit der Durchgangsbohrung 18 der Zwischenwand 3 mitbewegt hat. Des Weiteren ist erkennbar, dass die beiden Farbmarkierungen 24 und 25 mit Erreichen dieser Endlage der Zwischenwand 3 unterhalb der Frontwand 2 mit den beiden zugeordneten Durchbrüchen 22 und 23 in Überdeckung gelangen und somit nach außen hin sichtbar sind. Somit können diese Farbmarkierungen 24 und 25 zusätzlich zum erkennbaren Versatz der vorderen Stirnkante 19 der Zwischenwand 3 zu den Stirnkanten 9 und 26 als Erkennungsmerkmal für die "Aktivierung" des Datenträgers 1 dienen. Damit ist auch für den Laien eindeutig erkennbar, dass, sofern nicht beabsichtigt, durch unautorisierte Fremdeinwirkung eine Verstellung der Zwischenwand 3 im Datenträger 1 erfolgt ist.

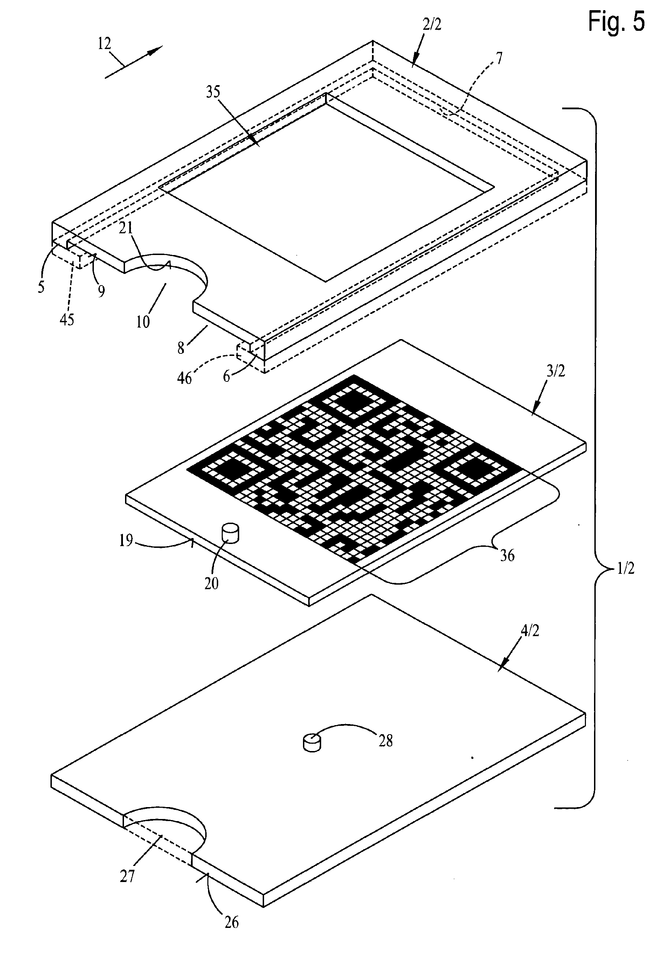

Fig. 5 zeigt eine zweite Ausführungsvariante eines Datenträgers 1/2, welcher ebenfalls aus einer Frontwand 2/2, einer Zwischenwand 3/2 sowie einer Rückwand 4/2 besteht. Im Unterschied zur Frontwand 2 aus den vorangegangenen Zeichnungsfiguren weist die Frontwand 2/2 einen zentralen Durchbruch 35 auf, welcher etwa mittig in der Frontwand 2/2 angeordnet ist. Des Weiteren sind in Fig. 5 die Bauteile des Datenträgers 1/2, welche mit den Bauteilen des Datenträgers 1 aus den vorangegangenen Zeichnungsfiguren identisch sind, mit denselben Bezugszeichen gekennzeichnet, so dass dementsprechend die Beschreibung zur Ausführungsvariante des Datenträgers 1 auch auf den Datenträger 1/2 zu lesen ist.

Weiter ist aus Fig. 5 ersichtlich, dass die Zwischenwand 3/2 oberseitig zur Frontwand 2/2 einen Gesamtcode 36 aufweist, welcher bei der vorliegenden Ausführungsvariante ebenfalls als sogenannter QR-Code ausgebildet ist.

Die Rückwand 4/2 ist identisch ausgebildet wie die Rückwand 4 aus Fig. 1, so dass dementsprechend auch dieselben Bezugszeichen für dieselben Bestandteile in Fig. 5 eingetragen sind. Insofern unterscheidet sich die Ausführungsvariante nach Fig. 5 von der Ausführungsvariante nach Fig. 1 dadurch, dass die Frontwand 2/2 selbst keinen ersten Teilcode enthält, sondern dass der Gesamtcode 36 direkt oberseitig auf der Zwischenwand 3/2 angeordnet ist. Dementsprechend sind hier auch keine zusätzlichen Durchbrüche vorhanden, welche sich an einen ersten Teilcode anschließen. Auch bei dieser Ausführungsvariante des Datenträgers 1/2 ist eine durchgehende Rückwand 4/2 nicht zwingend notwendig, sondern kann auch durch die Gleitstege 45 und 46 ersetzt sein, wie zur Ausführungsvariante des Datenträgers 1 beschrieben.

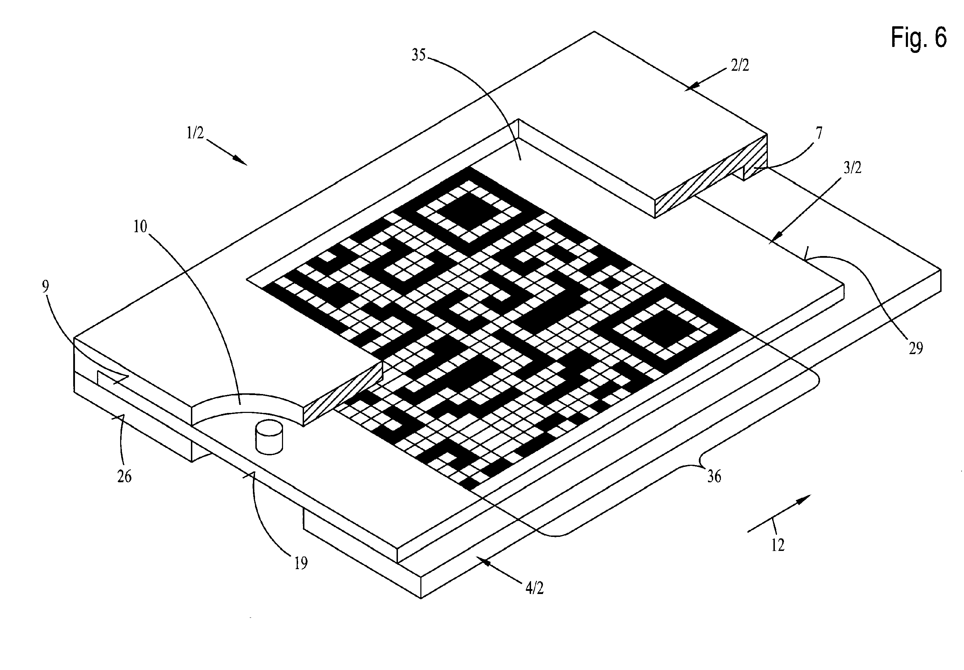

In der Ausgangsstellung ist die Zwischenwand 3/2 mit ihrer vorderen Stirnkante 19 bündig mit den beiden Stirnkanten 26 und 9 der Rückwand 4/2 bzw. 2/2. Diesen zusammengebauten Zustand zeigt Fig. 6 in perspektivischer Darstellung. Dabei ist in Fig. 6 die Frontwand 2/2 des Datenträgers 1/2 in mittigem Vertikalschnitt dargestellt.

Es ist erkennbar, dass die Zwischenwand 3/2 mit ihrer vorderen Stirnkante 19 bündig mit der vorderen Stirnkante 9 der Frontwand 2/2 sowie der Stirnkante 26 der Rückwand 4/2 abschließt. In dieser dargestellten Ausgangslage der Zwischenwand 3/2 ist der Gesamtcode 36 im Bereich der Aussparung 10 der Frontwand 2/2 teilweise verdeckt und somit von der Außenseite nicht sichtbar. Der Grad der Abdeckung ist dabei so gewählt, dass der sichtbare Bereich des Gesamtcodes 36 nicht mehr auslesbar ist.

Wird nun die Zwischenwand in Stellrichtung des Pfeiles 12 verstellt, bis diese mit ihrer rückseitigen Stirnkante 29 am hinteren Montagesteg 7 der Frontwand 2/2 ansteht, gelangt der Gesamtcode 36 mit dem Durchbruch 35 der Frontwand 2/2 vollständig in Überdeckung. Dementsprechend ist dieser Gesamtcode 36, wie in Fig. 3 zu dem gesamten Gesamtcode 30 dargestellt, vollständig sichtbar. Dementsprechend kann auch bei der Ausführungsvariante nach den Fig. 5 und 6 nach Verstellung der Zwischenwand 3/2 in ihre Endstellung der Gesamtcode 36 vollständig ausgelesen und bezüglich seiner Informationsinhalte elektronisch ausgewertet werden.

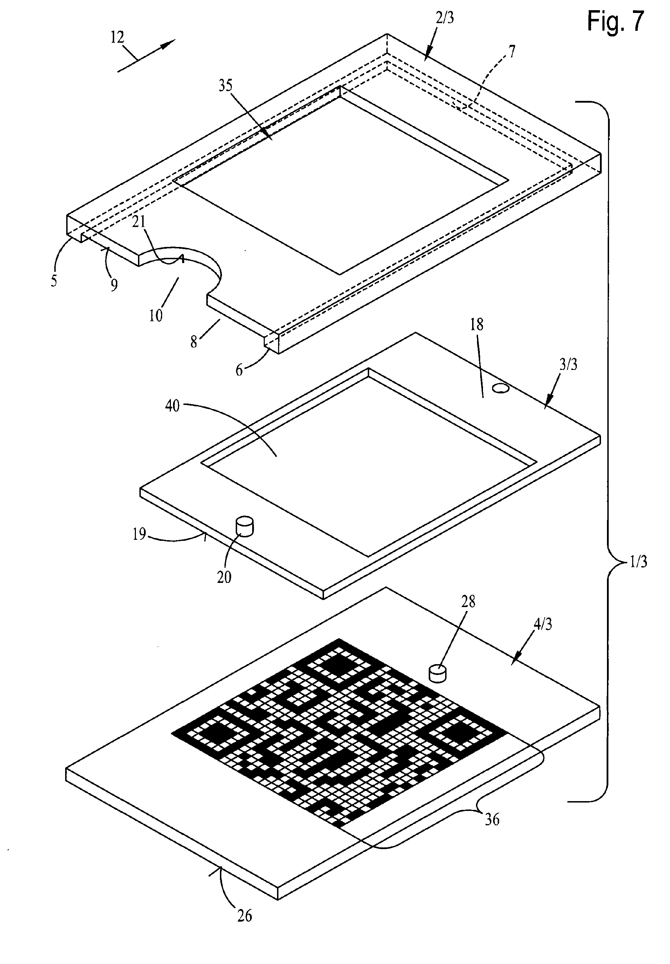

Fig. 7 zeigt eine dritte Variante 1/3 eines Datenträgers, welcher ebenfalls aus einer Frontwand 2/3, einer Zwischenwand 3/3 sowie einer Rückwand 4/3 besteht. Die Frontwand 2/3 ist identisch ausgebildet wie die Frontwand 2/2 aus den Fig. 5 und 6 und weist dementsprechend ebenfalls einen zentralen Durchbruch 35 auf. Die weiteren Bestandteile, welche mit der Ausführungsvariante nach der Fig. 1 identisch sind, sind entsprechend mit denselben Bezugszeichen versehen. Dementsprechend kann die Beschreibung zu Fig. 1 der Frontwand 2 auch auf die Ausführungsvariante nach Fig. 7 gelesen werden.

Im Unterschied zur Ausführungsvariante nach den vorangegangenen Zeichnungsfiguren bildet die Zwischenwand 3/3 einen zentralen Durchbruch 40, dessen Größe vorzugsweise der Größe des Durchbruches 35 der Frontwand 2/3 entspricht. Dieser zentrale Durchbruch 40 ist in der Ausgangslage der Zwischenwand 3/3 zur Frontwand 2/3 entgegengesetzt zur Längsrichtung 12 bzw. Stellrichtung 12 versetzt zum Durchbruch 35 der Frontwand 2/3 angeordnet.

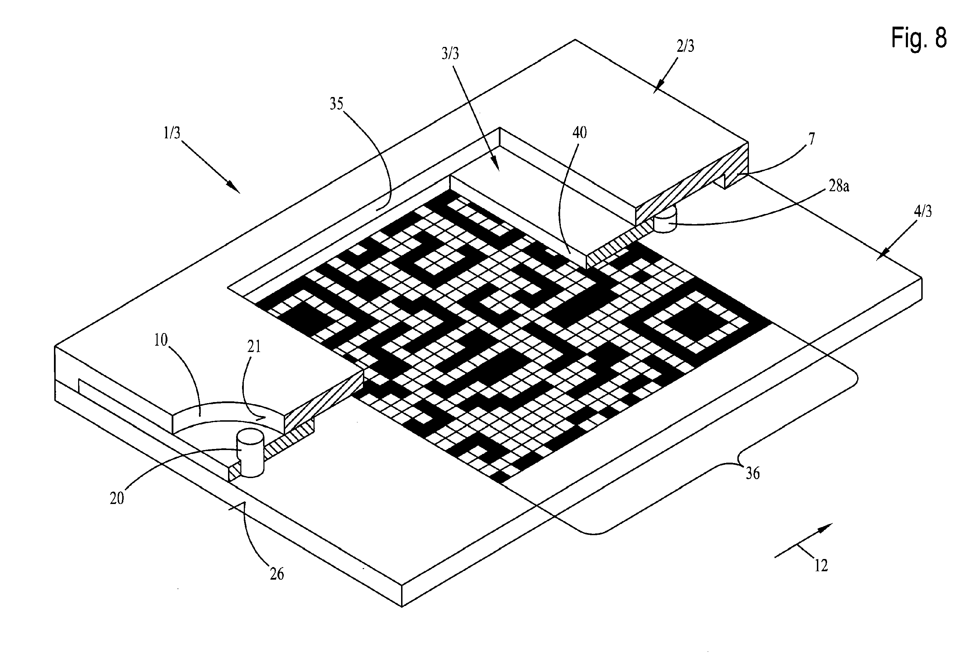

Bei der Ausführungsvariante nach Fig. 7 ist der Gesamtcode 36 nicht auf der Zwischenwand 3/3, sondern deckungsgleich mit dem Durchbruch 35 der Frontwand 2/3 oberseitig zur Frontwand 2/3 hin auf der Rückwand 4/3 angeordnet. Im montierten Zustand des Datenträgers 1/3 und in der Ausgangslage der Zwischenwand 3/3 wird der Gesamtcode 36 von einem Teil der Zwischenwand 3/3 abgedeckt, wie dies aus der perspektivischen Darstellung der Fig. 8 erkennbar ist. In Fig. 8 sind dabei die Frontwand 2/3 sowie die Zwischenwand 3/3 im symmetrischem Vertikalschnitt dargestellt.

Wird nun die Zwischenwand 3/3 aus der in Fig. 8 dargestellten Ausgangslage in Richtung der Stellbewegung des Pfeiles 12 in ihre Endlage verstellt, so gelangt der Durchbruch 40 der Zwischenwand 3/3 sowohl mit dem Gesamtcode 36 als auch mit dem Durchbruch 35 der Frontwand 2/3 in Überdeckung. Damit wird erreicht, dass der Gesamtcode 36 sowohl durch den Durchbruch 40 der Zwischenwand 3/3 als auch durch den Durchbruch 35 der Frontwand 2/3 vollständig nach außen sichtbar ist. Damit ist auch bei der Ausführungsvariante nach den Fig. 7 und 8 nach einer Verstellung der Zwischenwand 3/3 aus ihrer in Fig. 8 dargestellten Ausgangslage in ihre Endlage, wie diese zu Fig. 3 und 4 der Ausführungsvariante nach Fig. 1 dargestellt ist, ein Auslesen der Informationsinhalte des Gesamtcodes 36 in einfacher Weise durchführbar.

Es versteht sich, dass die grundsätzliche Ausgestaltung und Funktionsweise, insbesondere im Bezug auf die teilweise Abdeckung bzw. das teilweise Unkenntlich machen des Gesamtcodes 36 bzw. 30, auch in anderer Weise ausgestaltet sein kann. So kann beispielsweise die Zwischenwand zweiteilig ausgebildet sein und in Bezug auf die Ausführungsvariante nach den Fig. 5 und 6 aus zwei Endlagen, welche sich in den hinteren und vorderen Endbereichen befinden, in eine Mittelstellung gebracht werden, in welcher sich die beiden Hälften der Zwischenwand berühren. Damit kann auch hier eine Auslage erreicht werden, in welcher nur Teile des in diesem Falle zweiteiligen Gesamtcodes abgedeckt sind und somit dieser ebenfalls nicht auslesbar ist. Nach dem "Zusammenschieben" der beiden Teilcodes zu einem Gesamtcode, ergibt sich bezüglich des Gesamtcodes dasselbe Bild wie in Fig. 5 dargestellt, so dass bei entsprechender mittiger Anordnung dieses Gesamtcodes zum Durchbruch 35 auch wiederum dieser Gesamtcode vollständig erkennbar und auslesbar ist.

Zusammenfassend ist festzustellen, dass aufgrund der speziellen Ausgestaltung der Datenträger 1, 1/2 und 1/3 in der Ausgangslage der jeweiligen Zwischenwand ein Gesamtcode derart abdeckbar bzw. unkenntlich machbar ist, dass zwar noch erkennbar ist, dass ein solcher Gesamtcode vorhanden ist, jedoch dieser elektronisch nicht einfach auslesbar ist. Damit wird insbesondere bezüglich der Informationsinhalte des Gesamtcodes sicher erreicht, dass dieser nicht in einfacher Weise unbefugt ausgelesen werden kann.

Des Weiteren ist jedoch die Erfindung derart ausgebildet, dass in einfacher Weise die nicht sichtbaren Teile des Gesamtcodes durch Verstellen der Zwischenwand (oder Zwischenwände bi zweiteiliger Zwischenwand) sichtbar gemacht werden können, so dass dieser im Bedarfsfall befugt ausgelesen werden kann. Aufgrund der unterschiedlichen Gestaltungen der unterschiedlichen Ausführungsvarianten ist die verstellte Endlage der jeweiligen Zwischenwand 3, 3/2 oder 3/3 insbesondere dadurch erkennbar, dass deren Stirnkanten 19 in die Ausnehmung 10 der jeweiligen Frontwand 2, 2/2 oder auch 2/3 eingeschoben sind. Damit ist eine optische Erkennung gegeben, so dass der Inhaber eines solchen Datenträgers 1, 1/2 oder 1/3 sicher erkennen kann, ob dieser Datenträger 1, 1/2 oder 1/3 unbefugt manipuliert bzw. aktiviert worden ist. Zur besseren Erkennung dieser aktivierten Endlage der Zwischenwand sind bei der Ausführungsvariante nach den Fig. 1 bis 4 die Farbmarkierungen vorgesehen. Solche Farbmarkierungen können selbstverständlich bei entsprechender Ausgestaltung der Frontwand 2/2 oder 2/3 auch beim Datenträger 1/2 bzw. 1/3 vorgesehen sein. Auch die Fixierung über den Sicherungsstift 28 oder auch die erleichterte Verstellung durch den Anschlagstift 20, kann bei den Ausführungsvarianten nach den Fig. 5 und 7 vorgesehen sein.

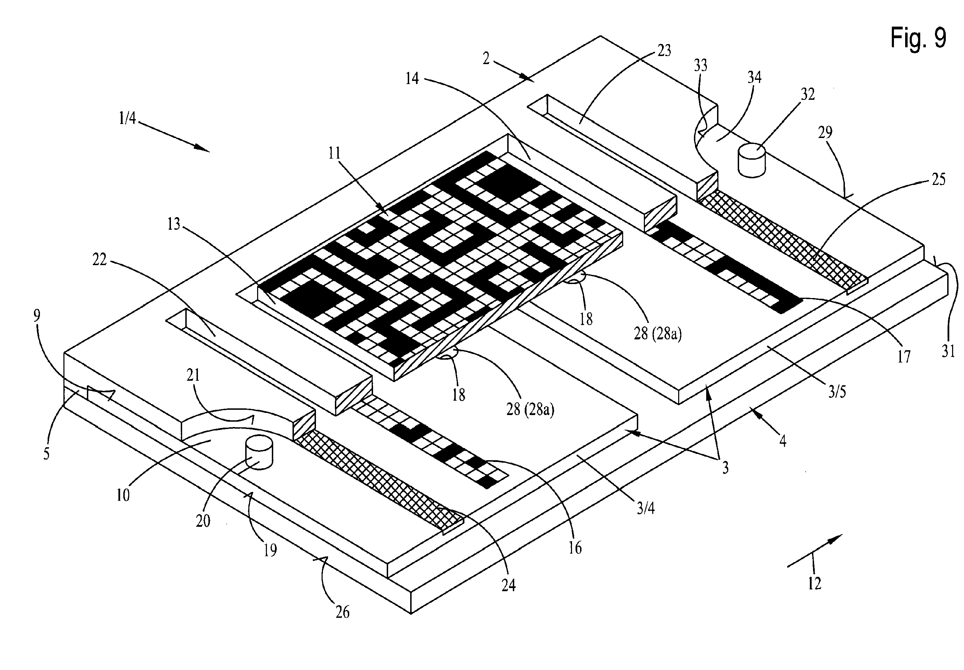

Fig. 9 zeigt beispielhaft eine Ausführungsvariante, welche auf der Ausführungsvariante nach den Zeichnungsfiguren 1 bis 4 basiert. Auch hier sind für dieselben Bauteil dieselben Bezugzeichen eingetragen, so dass die Beschreibung insbesondere zur Fig. 2 im Wesentlichen auch auf Fig. 9 gelesen werden kann.

Die Ausführungsvariante nach Fig. 9 unterscheidet sich von der Ausführungsvariante nach Fig. 2 dadurch, dass die Zwischenwand 3 zweiteilig ausgebildet ist und einen ersten Zwischenwandabschnitt 3/4 und einem zweiten Zwischenwandabschnitt 3/5 bildet.

Der erste Zwischenwandabschnitt 3/4 weist oberseitig den zweiten Teilcode 16 und die erste Farbmarkierung 24 auf. In seiner "inaktiven" Ausgangslage schließt der erste Zwischenwandabschnitt 3/4 mit seiner vorderen Stirnkante 19 bündig mit den beiden vorderen Stirnkanten 9 und 26 der Frontwand 2 und der Rückwand 4 ab. In dieser Ausgangslage werden die Farbmarkierung 24 und der Teilcode 16 von der Frontwand 2 unsichtbar abgedeckt. Wird der Zwischenwandabschnitt 3/4 in Richtung des Pfeils 12 verstellt, bis dieser mit seinem Anschlagstift 20 an der Begrenzungskante 21 des Aussparung 10 ansteht, so gelangen die Farbmarkierung 24 mit dem Durchbruch 22 und der Teilcode 16 mit dem Durchbruch 13 der Frontwand 2 in Überdeckung und sind nach außen sichtbar.

Der zweite Zwischenwandabschnitt 3/5 weist oberseitig den dritten Teilcode 17 und die zweite Farbmarkierung 25 auf. In seiner "inaktiven" Ausgangslage schließt der zweite Zwischenwandabschnitt 3/5 mit seiner hinteren Stirnkante 29 bündig mit der hinteren Stirnkanten 31 der Rückwand 4 ab. In dieser Ausgangslage werden die Farbmarkierung 25 und der Teilcode 17 von der Frontwand 2 unsichtbar abgedeckt. Wird der Zwischenwandabschnitt 3/5 entgegen der Richtung des Pfeils 12 verstellt, bis dieser mit seinem Anschlagstift 32 an der Begrenzungskante 33 des Aussparung 34 ansteht, so gelangen die Farbmarkierung 25 mit dem Durchbruch 23 und der Teilcode 17 mit dem Durchbruch 14 der Frontwand 2 in Überdeckung und sind nach außen sichtbar.

Nach der Verstellung der beiden Zwischenwandabschnitte 3/4 und 3/5 in ihre jeweilige Endstellung wird folglich der erste Teilcode 11 durch die beiden Teilcodes 16 und 17 ebenfalls zu einem nach außen vollständig sichtbaren Gesamtcode 30 ergänzt, wie dies aus Fig. 3 für die Ausführungsvariante nach den Fig. 1 und 2 erkennbar ist. Nachfolgend seien diverse Anwendungsmöglichkeiten der beispielhaft beschriebenen Datenträger 1, 1/2, 1/3 und 1/4 angegeben. Wobei an dieser Stelle nochmals angemerkt sei, dass die konstruktive Ausgestaltung auch anderweitig ausgebildet sein kann, wobei wichtig ist, dass einerseits in der Ausgangslage der Zwischenwand oder der Zwischenwandabschnitte der Gesamtcode nur teilweise soweit erkennbar ist, dass dieser nicht inhaltstechnisch auslesbar ist. Andererseits ist durch diese teilweise Sichtbarkeit des Gesamtcodes erkennbar, um welche Art Datenträger es sich handelt, so dass mit entsprechenden Hilfsmitteln (Handy oder dergleichen) nach Verbringen der Zwischenwand oder der Zwischenwandabschnitte in ihre Endlage(n) diverse benötigte Dateninhalte ausgelesen werden können.

So können die erfindungsgemäßen Datenträger beispielsweise an den nachfolgend genannten Gegenständen angebracht werden, wobei diese Aufstellung nicht abschließend ist, sondern nochweitere Anwendungsfälle denkbar sind:
Sturzhelm, Motorradhelm, Fahrradhelm, Autos, LKW, Bus, Motorrad, Fahrrad, Schultaschen, Sporttaschen, Reisetaschen, Reisekoffer, Mobiltelefon, direkt an Personen, Broschen / Rosetten.

Die Bestandteile können aus beliebigen Materialien, wie Metall, Kunststoff, Holz und dergleichen mehr hergestellt sein. Auch muss nicht zwingend eine rechteckige Grundform vorgesehen sein. Auch kann der Datenträger integraler Bestandteil der oben genannten Gegenstände sein.

Die Vorteile der Erfindung bestehen beispielsweise in:
- einer direkten, schnelle und rasche Identifikation einer Person;
- Identifikation von vermissten Personen;
- Identifikation von Personen, die sich verlaufen haben, z.B. Kinder, Erwachsene (Alzheimer);
- Identifikation von bewusstlosen Personen oder verunglückten Personen z.B. bei einem Unfall, z.B. Motorradfahrer, Fahrradfahrer, Skater, Skifahrer, Personen mit besonderen Krankheiten;
- Identifikation mit Lebensnotwendigen Daten, Name, Nachnahme, Adresse, Telefon, Kontaktperson, Blutgruppe;
- Identifikation von persönlichen Objekten und Gegenständen, wie z.B. Koffer, Reisetaschen, Schulranzen, Handy, Laptop und dgl. mehr.

Des Weiteren kann der erfindungsgemäße Datenträger auch Bestandteil eines mit einem Servicesystems sein, welches mit unterschiedlichen Sicherheitsstufe ausgestattet ist.

Bei einer niedrigen Sicherheitsstufe könne beispielsweise die Daten in Textformat durch eine QR-Lesegerät lesbar sein. Dies kann für einen schnellen Zugriff beispielsweise bei Helmen notwendig sein.

Bei einer hohen Sicherheitsstufe ist beispielsweise "nur" der Name mit Nachnahmen und die Internetadresse codiert. Mit einem Sicherheitskennwort, kann die Person selbst die Daten abrufen oder die Polizei/Behörden haben die Möglichkeit, über eine extra eingerichtete Homepage und Service Daten über die Person oder zu mindest über eine Kontaktperson abzurufen, die hinterlegt wurden und entsprechend die Person zu kontaktieren - z.B. bei Kindern (Schulranzen), ältere Personen, welche durch die Behörden aufgefunden worden sind.

Oder auch kann Reisegepäck über einen gesicherten Service identifiziert werden, damit sich der Finder an diesen Service wenden kann. Der Service kann dann, sofern vorab mit dem beim Service "registrierten" Besitzer vereinbart, die weiteren Daten an den Finder herausgeben oder, sollte es ein solche Vereinbarung nicht geben, den Besitzer vom Fund seines Gepäckstückes unterrichten.

## Patentansprüche

1. Datenträger (1, 1/4) mit einem mittels einer Kamera abtastbaren Gesamtcode (30), dessen Informationsinhalte mittels eines Decoders auswertbar sind, welchem das von der Kamera erfasste Bild übermittelbar ist,
**dadurch gekennzeichnet,**
**dass** der Datenträger (1) gehäuseartig ausgebildet ist und mit einer Frontwand (2) versehen ist und,
**dass** hinter der Frontwand (2) eine aus einer Ausgangslage in eine Endlage verstellbare Zwischenwand (3) vorgesehen ist und, dass auf der Frontwand (2) ein erster Teilcode (11) des Gesamtcodes (30) sichtbar angeordnet ist und,
**dass** in Stellrichtung (12) vor und hinter dem ersten Teilcode (11) sich jeweils an den ersten Teilcode (11) direkt anschließende Durchbrüche (13, 14) vorgesehen sind, welche sich quer zur Stellrichtung (12) über die gesamte Breite des ersten Teilcodes (11) erstrecken und,
**dass** auf der Zwischenwand (3) ein zweiter und ein dritter Teilcode (16, 17) angeordnet ist, welche jeweils quer zur Stellrichtung (12) verlaufen und in Stellrichtung (12) einen Abstand voneinander aufweisen, welcher dem Abstand der Durchbrüche (13, 14) der Frontwand (2) entspricht und,
**dass** der zweite und der dritte Teilcode (16, 17) in der Aufgangslage der Zwischenwand (3) von der Frontwand (2) unsichtbar verdeckt sind und,
**dass** der zweite und der dritte Teilcode (16, 17) nach Verstellung der Zwischenwand (3) in ihre Endlage durch die beiden Durchbrüche (13, 14) der Frontwand (2) vollständig sichtbar sind und den ersten Teilcode (11) sichtbar zum vollständigen Gesamtcode (30) ergänzen.

2. Datenträger nach Anspruch 1, **dadurch gekennzeichnet, dass** der Datenträger (1) eine Rückwand (4) aufweist, welche zusammen mit der Frontwand (2) einen Aufnahmeraum (8) bildet und,
dass im Aufnahmeraum (8) zwischen der Frontwand (2) und der Rückwand (4) die aus der Ausgangslage in die Endlage verstellbare Zwischenwand (3) verstellbar aufgenommen ist.

3. Datenträger (1/4) nach Anspruch 1 oder 2, **dadurch gekennzeichnet, dass** die Zwischenwand (3) zweiteilig ausgebildet ist und einen ersten Zwischenwandabschnitt (3/4) und einen zweiten Zwischenwandabschnitt (3/5) bildet und,
dass der erste Zwischenwandabschnitt (3/4) mit dem zweiten Teilcode (16) versehen ist und aus einer Ausgangslage in Richtung der Längsrichtung (12) in eine Endlage verstellbar ist, in welcher der zweite Teilcode (16) durch den ersten Durchbruch (13) der Frontwand (2) nach außen sichtbar ist und,
dass der zweite Zwischenwandabschnitt (3/5) mit dem dritten Teilcode (17) versehen ist und aus einer Ausgangslage entgegen der Richtung der Längsrichtung (12) in eine Endlage verstellbar ist, in welcher der dritte Teilcode (17) durch den zweiten Durchbruch (14) der Frontwand (2) nach außen sichtbar ist und, dass der zweite und der dritte Teilcode (16, 17) den ersten Teilcode (11) in den Endlagen der beiden Zwischenwandabschnitte (3/4, 3/5) zum einheitlichen Gesamtcode (30) ergänzen.

4. Datenträger (1/2) mit einem mittels einer Kamera abtastbaren Gesamtcode (36), dessen Informationsinhalte mittels eines Decoders auswertbar sind, welchem das von der Kamera erfasste Bild übermittelbar ist,
**dadurch gekennzeichnet,**
**dass** der Datenträger (1/2) gehäuseartig ausgebildet ist und mit einer Frontwand (2/2) versehen ist und,
**dass** hinter der Frontwand (2/2) eine aus einer Ausgangslage in eine Endlage verstellbare Zwischenwand (3/2) vorgesehen ist und,
**dass** die Frontwand (2/2) einen Durchbuch (35) aufweist und, dass auf der Zwischenwand (3/2) der Gesamtcode (36) angeordnet ist und,
**dass** der Gesamtcode (36) in der Ausgangslage der Zwischenwand (3/2) teilweise von der Frontwand (2/3) unsichtbar abgedeckt ist und,
**dass** sich der Gesamtcode (36) nach Verstellung der Zwischenwand (3/2) in ihre Endlage mit dem Durchbruch (35) der Frontwand (2/2) vollständig sichtbar in Überdeckung befindet.

5. Datenträger nach Anspruch 4, **dadurch gekennzeichnet, dass** der Datenträger (1/2) eine Rückwand (4/2) aufweist, welche zusammen mit der Frontwand (2/2) einen Aufnahmeraum (8) bildet und, dass im Aufnahmeraum (8) zwischen der Frontwand (2/2) und der Rückwand (4/2) die aus der Ausgangslage in die Endlage verstellbare Zwischenwand (3/2) verstellbar aufgenommen ist.

6. Datenträger (1/3) mit einem mittels einer Kamera abtastbaren Gesamtcode (36), dessen Informationsinhalte mittels eines Decoders auswertbar sind, welchem das von der Kamera erfasste Bild übermittelbar ist,
**dadurch gekennzeichnet,**
**dass** der Datenträger (1/3) ein Gehäuse mit einer Frontwand (2/3) und einer Rückwand (4/3) aufweist und,
**dass** zwischen der Frontwand (2/3) und der Rückwand (4/2) eine aus einer Ausgangslage in eine Endlage verstellbare Zwischenwand (3/3) vorgesehen ist und,
**dass** die Frontwand (2/3) einen Durchbruch (35) aufweist und, dass die Zwischenwand (3/3) einen Durchbruch (40) aufweist und,
**dass** auf der Rückwand (4/3) zur Frontwand (2/3) hin der Gesamtcode (36) angeordnet ist und,
**dass** der Gesamtcode (36) in der Ausgangslage der Zwischenwand (3/3) teilweise von der Zwischenwand (3/3) unsichtbar abgedeckt ist und,
**dass** der Gesamtcode (36) nach Verstellung der Zwischenwand (3/3) in ihre Endlage durch den Durchbruch (40) der Zwischenwand (3/3) und durch den Durchbruch (35) der Frontwand (2/3) vollständig sichtbar ist.

7. Datenträger nach einem der Ansprüche 1 bis 6, **dadurch gekennzeichnet, dass** die Frontwand (1) einen zusätzlichen Durchbruch (22) oder zwei zusätzliche quer zur Einschubrichtung verlaufende Durchbrüche (22, 23) aufweist und,
dass die Zwischenwand (3) oberseitig zur Frontwand (2) hin eine Farbmarkierung (24) oder zwei Farbmarkierungen (25) aufweist und,
dass die Farbmarkierung (24) oder die Farbmarkierungen (24, 25) in der Ausgangslage der Zwischenwand (3) durch die Frontwand (2) unsichtbar verdeckt ist bzw. sind und,
dass die Farbmarkierung (24) oder die Farbmarkierungen (24, 25) in der Endlage der Zwischenwand (3) durch den zusätzlichen Durchbruch (22) bzw. durch die zusätzlichen Durchbrüche (22, 23) nach außen durch die Frontwand (2) hindurch sichtbar sind.

8. Datenträger nach einem der Ansprüche 1 bis 7, **dadurch gekennzeichnet, dass** die Zwischenwand (3, 3/2, 3/3) in ihrer Ausgangslage durch eine Abreißstift (28) gesichert ist, welcher feststehend in der Rückwand (4, 4/2, 4/3) oder in der Frontwand (2, 2/2, 2/3) angeordnet ist und mit der Zwischenwand (3, 3/2, 3/3) in deren Ausgangslage in Eingriff steht.
